# EUROPÄISCHE PATENTSCHRIFT

(11) **EP 0 999 448 B1**
(45) Veröffentlichungstag und Bekanntmachung des Hinweises auf die Patenterteilung: **14.04.2004**
(21) Anmeldenummer: 99119736.9
(22) Anmeldetag: 05.10.1999
(51) Int. Cl.: G01P 3/44

(54) **Kassettendichtung mit Geschwindigkeitssensor**
Cartridge sealing with speed sensor
Joint en cartouche avec capteur de vitesse

(30) Priorität: 02.11.1998 DE 19850322
(43) Veröffentlichungstag der Anmeldung: 10.05.2000
(73) Patentinhaber: Carl Freudenberg KG, 69469 Weinheim (DE)
(72) Erfinder: Bergmann, Günter, 68542 Heddesheim (DE); Beyer, Rainer, 69469 Weinheim (DE); Burger, Stefan, 69469 Weinheim (DE)

(56) Entgegenhaltungen:
- EP-A- 0 420 041
- FR-A- 2 574 501
- US-A- 3 848 878
- US-A- 5 325 055
- US-A- 5 407 213
- US-A- 5 431 413
- US-A- 5 530 344
- US-A- 5 648 614
- US-A- 5 788 904

## Beschreibung

### Technisches Gebiet

Die Erfindung betrifft eine Kassettendichtung, umfassend einen Stütz- und einen Laufring von jeweils winkelförmig begrenztem Profil, die entgegengesetzt ineinanderliegend angeordnet sind und gemeinsam einen Hohlraum begrenzen, wobei der Stützring mit einem Dichtring verbunden ist, der zumindest eine dynamisch beanspruchte erste Dichtlippe und eine zweite Dichtlippe aufweist, die als Vorschaltsdichtung für die erste Dichtlippe ausgebildet ist, wobei die erste Dichtlippe die Lauffläche des Laufrings relativ verdrehbar und unter elastischer Vorspannung dichtend umschließt, wobei der Laufring mit einem magnetisierten, als Signalgeber ausgebildeten Polring aus polymerem Werkstoff mit in Umfangsrichtung verteilten Polen verbunden ist, wobei der Polring zur Erfassung einer Drehbewegung an einem Sensor vorbeibewegbar ist und wobei der Polring innerhalb des Hohlraums angeordnet ist.

### Stand der Technik

Eine solche Kassettendichtung ist aus der FR-A-2 574 501 bekannt. Der Polring besteht aus einem elastomeren Werkstoff, wobei die ebenfalls aus einem elastomeren Werkstoff bestehenden Dichtlippen des Dichtrings die Oberfläche der Polrings unmittelbar anliegend und dichtend berühren.

Aus der US 5,325,055 ist ein auf einer Welle angeordneter Polring bekannt, der durch eine Ummantelung aus Edelstahl vor äußeren Einflüssen geschützt ist.

Aus der EP 0 647 851 A1 sind eine Vielzahl von Kassettendichtungen bekannt, umfassend einen Stützring mit einem Dichtring und einem Laufring, wobei der Laufring mit einem Polring verbunden ist. Der Polring ist zur Erfassung von Drehbewegungen an einem Sensor vorbeibewegbar. Die Verbindung des Polrings mit dem Laufring kann auf unterschiedliche Arten erfolgen, wobei der Polring bei einem der vorbekannten Ausführungsbeispiele auf der dem Laufring abgewandten Seite von einem nicht magnetisierbaren, unmittelbar anliegenden Schutzring überdeckt ist, der von einem Teil des den Polring vollständig einhüllenden Dichtungswerkstoffs gebildet ist. Die dynamisch beanspruchte erste Dichtlippe ist einer zweiten Dichtlippe einer Vorschaltdichtung nachgeschaltet, wobei die beiden Dichtlippen einstückig ineinanderübergehend ausgebildet sind. Die erste Dichtlippe berührt den Axialschenkel, die zweite Dichtlippe den Radialschenkel des Laufrings unmittelbar anliegend.

Eine weitere Sensordichtung ist beispielsweise aus der DE 196 44 744 A1 bekannt. Die Sensordichtung bildet einen Bestandteil einer Wälzlagerung, wobei die Wälzlagerung eine Drehzahlmesseinrichtung umfasst. Die Drehzahlmesseinrichtung besteht im wesentlichen aus einem Polring und einem Sensor, wobei der Sensor als separates Bauteil ausgebildet und außerhalb der Wälzlagerung angeordnet ist. Zwischen dem Innen- und dem Außenring des Wälzlagers ist eine Kassettendichtung angeordnet, wobei der Laufring der Kassettendichtung mit einem Polring aus elastomerem Werkstoff versehen ist. Der Polring ist vor Verschmutzung, insbesondere mit magnetischen Partikeln, durch ein stationäres nicht ferromagnetisches Abdeckteil geschützt, das den Stützring für den Dichtring der Kassettendichtung bildet. Der Sensor tastet den Polring magnetisch durch das nicht ferromagnetische Abdeckteil hindurch ab, wobei das Abdeckteil beispielsweise aus nicht rostendem Stahl, Nichteisen-Metall oder Kunststoff bestehen kann. Bei der zuvor beschriebenen Sensordichtung ist von Nachteil, daß der Polring mit seiner dem Sensor zugewandten Oberfläche dem nicht ferromagnetischen Abdeckteil mit axialem Abstand benachbart zugeordnet ist, wobei sich innerhalb des durch den Abstand gebildeten Spalts Verunreinigungen, beispielsweise auch magnetische Partikel in Form von Einpreßspänen an den Polring anlagern können, die eine exakte Drehzahlerfassung der relativ zueinander rotierenden Teile beeinträchtigen. Der axiale Abstand verringert außerdem die Signalgüte und Genauigkeit des Signals. Außerdem bewirkt der schmale Polring eine weitere axiale Abstandsverringerung des lesbaren Signalbereichs. Ferner hat die außen angeordnete, stehende Dichtung keine Schleuderwirkung zum Fernhalten von Verunreinigungen von der Hauptdichtung.

Aus der US 5,325,055 ist ein magnetischer Polring bekannt, der durch einen nichtmagnetischen Schutzring aus Edelstahl vor Abnutzung und agressiver Umgebung geschützt ist. Der Schutzring berührt den Polring unmittelbar anliegend und umschließt diesen fast vollständig. Die Dicke des Schutzrings beträgt etwa 0,01 Inches.

### Darstellung der Erfindung

Der Erfindung liegt die Aufgabe zugrunde, die zuvor genannten Nachteile zu vermeiden und eine Kassettendichtung zu zeigen, durch die sich auch bei starker Beaufschlagung mit Verunreinigungen während einer langen Gebrauchsdauer eine verbesserte Signalgüte und Genauigkeit des Signals ergibt.

Diese Aufgabe wird erfindungsgemäß mit den Merkmalen von Anspruch 1 gelöst. Auf vorteilhafte Ausgestaltungen nehmen die Unteransprüche bezug.

Im Rahmen der vorliegenden Erfindung ist es vorgesehen, dass die Kassettendichtung einen Stütz- und einen Laufring von jeweils winkelförmig begrenztem Profil umfasst, die entgegengesetzt ineinanderliegend angeordnet sind und gemeinsam einen Hohlraum begrenzen, wobei der Stützring mit einem Dichtring verbunden ist, der zumindest eine dynamisch beanspruchte erste Dichtlippe aufweist, die die Lauffläche des Laufrings relativ verdrehbar und unter elastischer Vorspannung dichtend umschließt, wobei der Laufring mit einem magnetisierten, als Signalgeber ausgebildeten Polring aus polymerem Werkstoff mit in Umfangsrichtung verteilten Polen verbunden ist, wobei der Polring zur Erfassung einer Drehbewegung an einem Sensor vorbeibewegbar ist, wobei der Polring innerhalb des Hohlraums angeordnet ist, wobei der Polring auf der dem Laufring abgewandten Seite von einem nicht magnetisierbaren Schutzring überdeckt ist und wobei der Schutzring mit einer Dichtfläche für eine zweite Dichtlippe versehen ist, die als Vorschaltdichtung für die erste Dichtlippe ausgebildet und am Stützring festgelegt ist.

Dadurch, daß der Schutzring die dem Sensor zugewandte Oberfläche des Polrings unmittelbar anliegend berührt, ist eine Beaufschlagung dieser Oberfläche mit Verunreinigungen, beispielsweise mit magnetischen Partikeln, zuverlässig ausgeschlossen. Der Schutzring weist zumindest auf der dem Sensor zugewandten Seite eine glatte Oberfläche auf, so dass sich Verunreinigungen, die die Messgenauigkeit der Drehzahlerfassung beeinflussen könnten, dort nicht anlagern können.

Der nicht ferromagnetische Werkstoff des Schutzrings beeinträchtigt die magnetische Abtastung des magnetisierten Polrings nicht, da nicht ferromagnetische Werkstoffe keinen Einfluss auf Permanentmagnetfelder haben.

Bevorzugt überdeckt der Schutzring die gesamte, dem Sensor zugewandte Oberfläche des Polrings.

Der Schutzring ist mit einer Dichtfläche für eine zweite Dichtlippe versehen, die als Vorschaltdichtung für die erste Dichtlippe ausgebildet und am Stützring festgelegt ist. Bei einer derartigen Ausgestaltung ist von Vorteil, dass die Kassettendichtung insgesamt kompakte Abmessungen aufweist, da der Schutzring mehrere Funktionen in sich vereint. Einerseits schützt der Schutzring die dem Sensor zugewandte Oberfläche des aus elastomerem Werkstoff bestehenden Polrings, andererseits bildet der Schutzring die Dichtfläche für die zweite Dichtlippe. Eine dauerhafte dynamische Abdichtung der zweiten Dichtlippe unmittelbar auf der Oberfläche des elastomeren Polrings wäre demgegenüber nicht möglich.

Gemäß einer vorteilhaften Ausgestaltung kann der Sensor innerhalb des Hohlraums angeordnet und am Stützring festgelegt sein, wobei der Sensor signalleitend mit einer Auswertelektronik verbunden ist. Der Sensor und die Auswertelektronik können durch eine flexible Leiterplatte miteinander verbunden sein, wobei der Stütz- und der Dichtring sowie der Sensor, der Polring und die flexible Leiterplatte bevorzugt eine vormontierbare Einheit bilden. Durch die vormontierbare Einheit ist der Einbau der Kassettendichtung mit integrierter Drehzahlerfassung wesentlich vereinfacht und die Gefahr von Montagefehlern ist auf ein Minimum begrenzt. Nach dem Einpressen der vormontierbaren Einheit in den Spalt zwischen zwei relativ zueinander verdrehbaren Maschinenelementen sind nur noch die Anschlussklemmen der flexiblen Leiterplatte mit einer Auswertelektronik zu verbinden, um die Drehzahlerfassung zu aktivieren. Eine zusätzliche Fixierung und ein zusätzliches Gehäuse des Sensors entfällt.

Der Schutzring besteht aus PTFE. Bei Verwendung eines Schutzrings aus PTFE ist von Vorteil, dass sich dieser einfacher verarbeiten lässt. Außerdem ist ein Schutzring aus PTFE dünner als ein Schutzring aus einem Edelstahl. Der Abstand des Sensors zum Polring lässt sich dadurch verringern, so dass sich eine verbesserte Signalgüte und Genauigkeit des Signals ergibt. Durch die glatte, selbstschmierende Oberfläche eines PTFE-Schutzrings wird dessen Verunreinigung auch während einer langen Gebrauchsdauer der Sensordichtung und starker Beaufschlagung mit Verunreinigungen auf ein Minimum reduziert.

Ferner ist der Schutzring als Hitzeschild für den Polring ausgebildet. Insbesondere bei Verwendung der erfindungsgemäßen Sensordichtung im Bereich des Fahrwerks von Kraftfahrzeugen ist dies von hervorzuhebendem Vorteil, insbesondere dann, wenn die Sensordichtung in der Nähe der wärmeabstrahlenden Bremsanlage zur Anwendung gelangt.

Der Schutzring kann durch eine Schutzfolie gebildet sein. Sie weist bevorzugt eine Dicke von 0,1 bis 0,6 mm auf, vorteilhafterweise von 0,2 bis 0,4 mm. Dadurch ist einerseits ein ausgezeichneter Schutz des Polrings vor Verunreinigungen und Wärme sichergestellt. Andererseits ist der Luftspalt zwischen Polring und Sensor von dem dünnen, folienartigen Schutzring nur sehr geringfügig beeinflusst.

### Kurzbeschreibung der Zeichnung

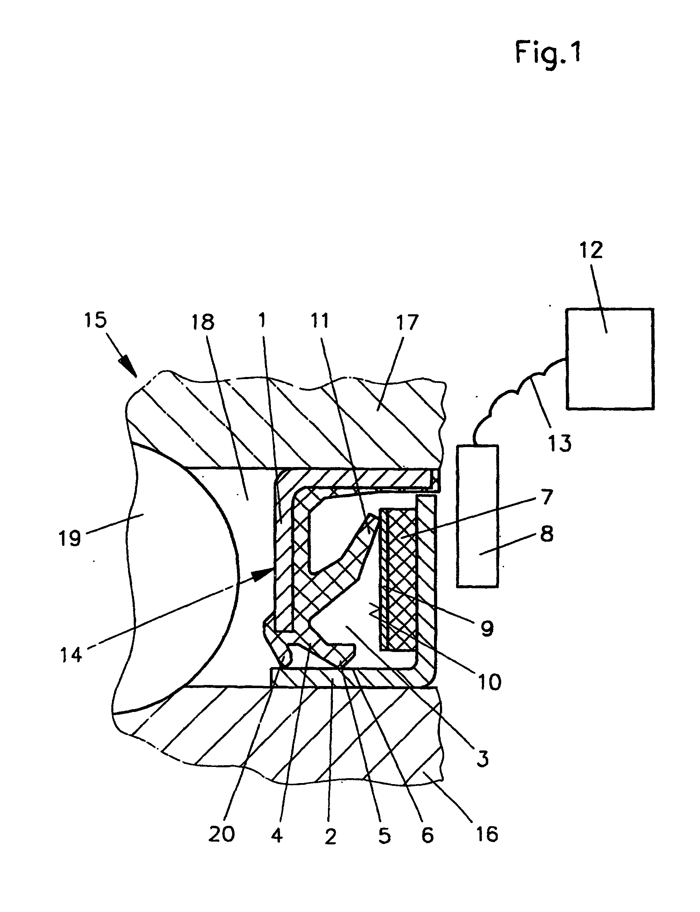

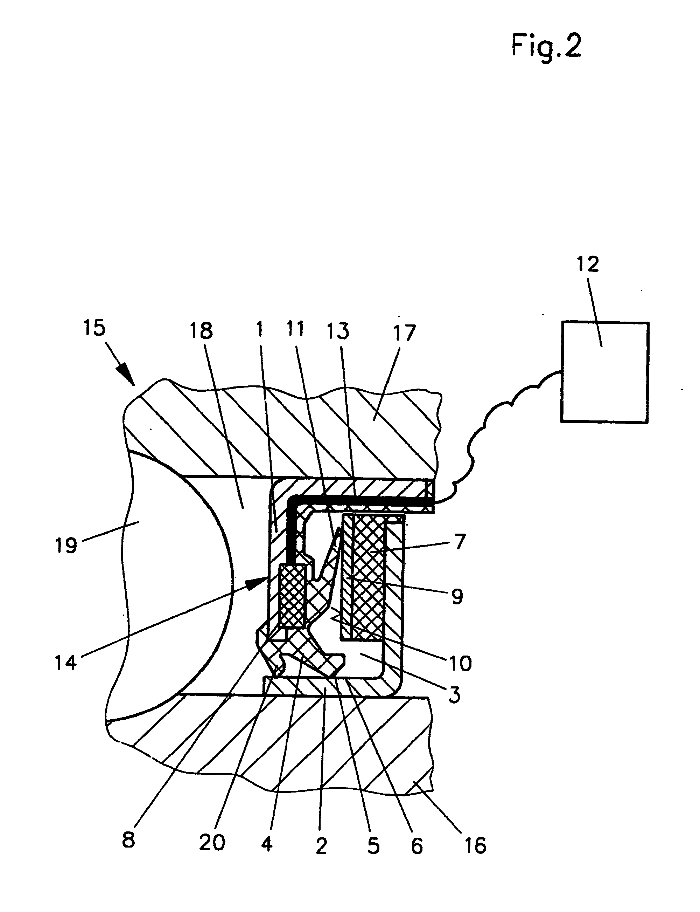

Die Erfindung wird nachfolgend anhand der Figuren 1 und 2 näher beschrieben. Diese zeigen in jeweils schematischer Darstellung:
- Figur 1: ein erstes Ausführungsbeispiel, bei dem der Polring innerhalb der Kassettendichtung, der Sensor demgegenüber außerhalb angeordnet ist,
- Figur 2: ein zweites Ausführungsbeispiel, bei dem sowohl der Polring als auch der Sensor innerhalb der Kassettendichtung angeordnet sind.

### Ausführung der Erfindung

Die erfindungsgemäße Kassettendichtung gelangt in den Ausführungsbeispielen Figuren 1 und 2 zur Abdichtung eines Wälzlagers 15 zur Anwendung, das im wesentlichen aus einem Innenring 16 und einem Außenring 17 besteht, wobei der Außenring 17 den Innenring 16 mit radialem Abstand umschließt. In dem durch den Abstand gebildeten Spalt 18 sind die Wälzkörper 19 angeordnet.

Die erfindungsgemäße Kassettendichtung kann jedoch auch für andere Anwendungsfälle Verwendung finden, beispielsweise zum Abdichten einer Welle eines Aggregats.

Der Polring 7 ist als Signalgeber ausgebildet, besteht aus einem magnetisierten elastomeren Werkstoff und ist mit in Umfangsrichtung verteilten Polen versehen.

Der Schutzring 9 berührt den Polring 7 in jedem der Ausführungsbeispiele Figuren 1 und 2 unmittelbar anliegend.

In den hier gezeigten Ausführungsbeispielen ist der Polring 7 jeweils durch den Laufring 2 der Sensordichtung drehfest mit dem Innenring 16 des Wälzlagers 15 verbunden und relativ zum Außenring 17 verdrehbar. Während der bestimmungsgemäßen Verwendung der Sensordichtung bewegt sich der Polring 7 mit der Geschwindigkeit des Innenrings 16 am Sensor 8 vorbei, der, bezogen auf den Außenring 17 keine Relativbewegung ausführt. Sowohl der Laufring 2 als auch der Stützring 1 bestehen aus einem metallischen Werkstoff, wobei zwischen dem Polring 7 und dem Sensor 8 ein aus einem nicht ferromagnetischen Werkstoff bestehender Schutzring 9 angeordnet ist und die dem Sensor 8 zugewandte Oberfläche des Polrings 7 unmittelbar anliegend berührt. Der Schutzring 9 ist in diesem Ausführungsbeispiel folienartig dünn ausgebildet, besteht aus PTFE und weist eine Dicke von 0,2 mm auf.

Der Stützring 1 ist in jedem Ausführungsbeispiel mit drei dynamisch beanspruchten Dichtlippen versehen. Beiderseits der ersten Dichtlippe 5 ist jeweils eine Vorschaltdichtung 11, 20 angeordnet.

In Figur 1 ist eine Einbausituation für eine erfindungsgemäße Kassettendichtung gezeigt.

In Figur 1 umfasst die Kassettendichtung einen Laufring 2 sowie einen Stützring 1, wobei am Stützring 1 der Dichtring 4 mit seiner ersten Dichtlippe 5 und die jeweils benachbarten beiden Vorschaltdichtungen 11, 20 angeordnet sind. In axialer Richtung auf der Innenseite des Radialschenkels des Laufrings 2 ist der aus einem elastomeren Werkstoff bestehende Polring 7 angeordnet, der in diesem Ausführungsbeispiel unmittelbar mit dem Laufring 2 vulkanisiert ist. Der Laufring 2 besteht in diesem Ausführungsbeispiel aus einem nicht ferromagnetischen Werkstoff.

Auf der dem Sensor 8 abgewandten Seite des Polrings 7 ist dieser von dem Schutzring 9 überdeckt, an den sich die erste Vorschaltdichtung 11 dichtend anlegt.

Sowohl die dem Sensor 8 als auch die der zweiten Dichtlippe 11 zugewandte Oberfläche des Polrings 7 sind durch die erfindungsgemäße Ausgestaltung ausgezeichnet vor Verunreinigungen geschützt.

In Figur 2 ist ein zweites Ausführungsbeispiel gezeigt, in dem die Kassettendichtung als vormontierbare Einheit 14 ausgebildet ist. Die vormontierbare Einheit 14 umfasst den mit dem Laufring 2 verbundenen Polring 7, der auf der dem Sensor 8 zugewandten Seite von einem Schutzring 9 überdeckt ist, wobei der Schutzring 9 aus einem nicht ferromagnetischen Material besteht. Am Stützring 1 ist der Sensor 8 befestigt und durch eine flexible Leiterplatte 13 mit dem Kabel und der Auswertelektronik 12 verbunden.

## Patentansprüche

1. Kassettendichtung, umfassend einen Stütz- (1) und einen Laufring (2) von jeweils winkelförmig begrenztem Profil, die entgegengesetzt ineinanderliegend angeordnet sind und gemeinsam einen Hohlraum (3) begrenzen, wobei der Stützring (1) mit einem Dichtring (4) verbunden ist, der zumindest eine dynamisch beanspruchte erste Dichtlippe (5) und eine zweite Dichtlippe (11) aufweist, die als Vorschaltsdichtung für die erste Dichtlippe (5) ausgebildet ist, wobei die erste Dichtlippe (5) die Lauffläche (6) des Laufrings (2) relativ verdrehbar und unter elastischer Vorspannung dichtend umschließt, wobei der Laufring (2) mit einem magnetisierten, als Signalgeber ausgebildeten Polring (7) aus polymerem Werkstoff mit in Umfangsrichtung verteilten Polen verbunden ist, wobei der Polring (7) zur Erfassung einer Drehbewegung an einem Sensor (8) vorbeibewegbar ist und wobei der Polring (7) innerhalb des Hohlraums (3) angeordnet ist, **dadurch gekennzeichnet, dass** der Polring (7) auf der dem Laufring (2) abgewandten Seite von einem nicht magnetisierbaren Schutzring (9) aus PTFE überdeckt ist, wobei der Schutzring (9) den Polring (7) unmittelbar anliegend berührt und wobei der Schutzring (9) mit einer Dichtfläche (10) für die zweite Dichtlippe (11) versehen ist.

2. Kassettendichtung nach Anspruch 1, **dadurch gekennzeichnet, dass** der Sensor (8) innerhalb des Hohlraums (3) angeordnet und am Stützring (1) festgelegt ist und dass der Sensor (8) signalleitend mit einer Auswertelektronik (12) verbunden ist.

3. Kassendichtung nach Anspruch 2, **dadurch gekennzeichnet, dass** der Sensor (8) und die Auswertelektronik (12) durch eine flexible Leiterplatte (13) verbunden sind.

4. Kassettendichtung nach Anspruch 3, **dadurch gekennzeichnet, dass** der Stütz- (1) und der Dichtring (4) sowie der Sensor (8), der Polring (7) und die flexible Leiterplatte (13) eine vormontierbare Einheit (14) bilden.

5. Kassettendichtung nach einem der Ansprüche 1 bis 4, **dadurch gekennzeichnet, dass** der Schutzring (9) durch eine Schutzfolie gebildet ist.

6. Kassettendichtung nach einem der Ansprüche 1 bis 5, **dadurch gekennzeichnet, dass** der Schutzring (9) eine Dicke von 0,1 bis 0,6 mm hat.

## Claims

1. A cassette seal, comprising a supporting ring (1) and a running ring (2) of in each case an angularly limited profile, which are arranged opposite and lying in each other and together bound a cavity (3), the supporting ring (1) being connected to a sealing ring (4) which has at least one dynamically loaded first sealing lip (5) and a second sealing lip (11) which is designed as a front seal for the first sealing lip (5), the first sealing lip (5) enclosing the running surface (6) of the running ring (2) such that it can rotate relative thereto and seals it under resilient prestress, the running ring (2) being connected to a magnetic pole ring (7), formed as a signal generator, of polymeric material with poles distributed in the circumferential direction, it being possible for the pole ring (7) to be moved past a sensor (8) in order to register a rotational movement, and the pole ring (7) being arranged inside the cavity (3), **characterized in that**, on the side facing away from the running ring (2), the pole ring (7) is covered by a non-magnetizable protective ring (9) made of PTFE, the protective ring (9) resting directly on the pole ring (7) with contact and the protective ring (9) being provided with a sealing surface (10) for the second sealing lip (11).

2. A cassette seal according to claim 1, **characterized in that** the sensor (8) is arranged inside the cavity (3) and is fixed to the supporting ring (1), and **in that** the sensor (8) is connected in a signal-conducting manner to evaluation electronics (12).

3. A cassette seal according to claim 2, **characterized in that** the sensor (8) and the evaluation electronics (12) are connected by a flexible printed circuit board (13).

4. A cassette seal according to claim 3, **characterized in that** the supporting ring (1) and the sealing ring (4), and also the sensor (8), the pole ring (7) and the flexible printed circuit board (13) form a unit (14) that can be preassembled.

5. A cassette seal according to one of claims 1 to 4, **characterized in that** the protective ring (9) is formed by a protective film.

6. A cassette seal according to one of claims 1 to 5, **characterized in that** the protective ring (9) has a thickness of 0.1 to 0.6 mm.

## Revendications

1. Joint en cartouche, comprenant une bague d'appui (1) et une portée annulaire (2) d'un profil délimité de forme angulaire respectivement, disposés de manière incidente l'un en face de l'autre et délimitant ensemble une cavité (3), la bague d'appui (1) étant associée à une bague d'étanchéité (4), qui présente au moins une première lèvre d'étanchéité (5) sollicitée de manière dynamique et une seconde lèvre d'étanchéité (11), laquelle est conçue comme joint d'étanchéité amont pour la première lèvre d'étanchéité (5), la première lèvre d'étanchéité (5) entourant hermétiquement de manière relativement rotative le chemin de roulement (6) de la portée annulaire (2) et sous précontrainte élastique, la portée annulaire (2) étant relié à une bague polaire (7) magnétisée en matériau polymère, conçue comme transmetteur de signaux, à pôles répartis dans le sens circonférentiel, la bague polaire (7) étant déplaçable à côté d'un capteur (8) pour détecter un mouvement rotatif et la bague polaire (7) étant disposée à l'intérieur de la cavité (3), **caractérisé en ce que** la bague polaire (7) est recouverte sur sa face opposée à la portée annulaire (2) d'une bague protectrice (9) en PTFE non magnétisable, la bague protectrice (9) touchant de manière directement adjacente la bague polaire (7) et la bague protectrice (9) étant pourvue d'une surface d'étanchéité (10) pour la seconde lèvre d'étanchéité (11).

2. Joint en cartouche selon la revendication 1, **caractérisé en ce que** le capteur (8) est disposé à l'intérieur de la cavité (3) et fixé sur la bague d'appui (1) et **en ce que** le capteur (8) est relié à une électronique d'évaluation (12) de manière à acheminer les signaux.

3. Joint en cartouche selon la revendication 2, **caractérisé en ce que** le capteur (8) et l'électronique d'évaluation (12) sont reliés par une carte à circuits imprimés (13) flexible.

4. Joint en cartouche selon la revendication 3, **caractérisé en ce que** la bague d'appui (1) et la bague d'étanchéité (4), ainsi que le capteur (8), la bague polaire (7) et la carte à circuits imprimés (13) flexible forment une unité (14) prémontable.

5. Joint en cartouche selon l'une des revendications 1 à 4, **caractérisé en ce que** la bague protectrice (9) est formée par un film protecteur.

6. Joint en cartouche selon l'une des revendications 1 à 5, **caractérisé en ce que** la bague protectrice (9) a une épaisseur de 0,1 à 0,6 mm.
